# EUROPÄISCHE PATENTSCHRIFT

(11) **EP 4 036 543 B1**
(45) Veröffentlichungstag und Bekanntmachung des Hinweises auf die Patenterteilung: **28.06.2023**
(21) Anmeldenummer: 22150853.4
(22) Anmeldetag: 11.01.2022
(51) Int. Cl.: G01L 9/00, G01L 13/00, G01L 15/00, G01L 19/00

(54) **DRUCKSENSOR**
PRESSURE SENSOR
CAPTEUR DE PRESSION

(30) Priorität: 28.01.2021 DE 102021101883
(43) Veröffentlichungstag der Anmeldung: 03.08.2022
(73) Patentinhaber: SICK AG, 79183 Waldkirch (DE)
(72) Erfinder: Schweiger, Stefan, 79331 Teningen (DE); Weber, Thomas, 77960 Seelbach (DE)

(56) Entgegenhaltungen:
- EP-A1- 3 400 867
- US-A1- 2010 218 612
- US-A1- 2014 107 527

## Beschreibung

Die vorliegende Erfindung betrifft einen Drucksensor mit einem Gehäuse mit einer Steuer- und Auswerteeinheit, wobei an dem Gehäuse des Drucksensors eine Vielzahl von Druckanschlüssen angeordnet sind, gemäß dem Oberbegriff von Anspruch 1.

Zur Auswertung einer Vielzahl von Druckmessstellen werden nach dem Stand der Technik in der industriellen Automatisierungstechnik einkanalige Sensoren in großer Anzahl an der Messstelle eingesetzt. Die Signale der einzelnen Drucksensoren werden von einer oder mehreren zentralen Steuerungen zusammengefasst, ausgewertet und die Ergebnisse weitergegeben.

Dadurch entsteht ein großer Platzbedarf, da viele einkanalige Sensoren angeordnet werden müssen. Ebenfalls ist damit ein hoher Montageaufwand verbunden, da viele Befestigungen notwendig sind und aufwändig viel Montagematerial benötigt wird. Weiter liegt nachteilig ein hoher Verkabelungsaufwand vor, da jeder einzelne einkanalige Sensor elektrisch angeschlossen werden muss. Zur Auswertung sind große Steuerungen notwendig mit vielen Ein- und Ausgängen. Weiter ist eine komplexe Programmierung der Steuerung erforderlich. Weiter verringert sind die mittlere Betriebsdauer bis zum Ausfall (mean time to failure, MTTF) durch die Abhängigkeit von sehr vielen Sensoren.

Die US 9841340 B1 offenbart ein Druckmessgerät, umfassend mehrere Lufteinlässe, die konfiguriert sind, um jeweils einen von mehreren verschiedenen Luftströmen aufzunehmen. Eine Ventilanordnung ist vorgesehen, die konfiguriert ist, um den Betrieb der Druckmessvorrichtung zwischen einer Messbetriebsart und einer Wartungsbetriebsart umzuschalten, wobei die Ventilanordnung mehrere Eingänge umfasst, die mit den jeweiligen Lufteinlässen gekoppelt und so konfiguriert sind, dass sie die jeweiligen Lufteinlässe aufnehmen und eine Vielzahl von Ausgängen.

Die US 2010/0218612 A1 offenbart einen Doppeldrucksensor mit einer reduzierten Anzahl von Teilen zur Vereinfachung und eine erhöhte Montagefreundlichkeit und verbesserte Luftdichtheit. Der Doppeldrucksensor hat einen luftdichten Behälter, zwei Drucksensoreinheiten, die in dem luftdichten Behälter aufgenommen sind, so dass sie in engem Kontakt miteinander sind und ein Substrat. Die Drucksensoreinheiten haben zwei Sockel, zwei druckempfindliche Membranchips und eine Ausgangskorrekturschaltung. Die druckempfindlichen Membranchips sind jeweils an den Sockeln befestigt. Die Sockel bestehen aus Grund körpern, in denen Kommunikationspfade Verbindungswege aufweisen, sowie aus Druckeinleitungsabschnitten, die mit den Grundkörpern, integriert sind und Grundkörpem.

Die US 2014/0107527 A1 offenbart ein Messmodul für die medizinische Anwendung, das mit einem Gehäuse versehen ist, das eine Anzahl von Anschlüssen für Katheter, eine Anzahl von Drucksensoren, eine Anzahl von Leitungen für den Flüssigkeitsanschluss an einen der ersten Anschlüsse aufweist, wobei jede der Leitungen mindestens eine Öffnung zum Zweck der Flüssigkeitsverbindung zu einem der Drucksensoren, und mindestens einen zweiten Anschluss für einen Anschluss für ein Kommunikationsmodul zur Übertragung von Messdaten von den Drucksensoren zum Kommunikationsmodul aufweist. Das Messmodul weist das Merkmal auf, dass mindestens zwischen den Leitungen und den Drucksensoren mindestens eine Dichtung angeordnet ist.

Die EP 3400867 A1 offenbart ein System zur Durchführung von In-vivo-Druckmessungen, umfassend einen oder mehrere Drucksensoren, ein Anschlussmodul, das mit einem oder mehreren elektrischen Kopplungselementen für den einen oder die mehreren Drucksensoren und einem oder mehreren Kopplungsmitteln versehen ist für einen Katheter. Das eine oder die mehreren Kopplungsmittel für einen Katheter sind jeweils mit mindestens drei Anschlüssen und einem Hahn zum Koppeln von zwei der drei Anschlüsse nach Wunsch versehen. Jedes der ein oder mehreren Kopplungsmittel ist als lösbar mit dem Anschlussmodul verbindbares Kopplungsmodul ausgebildet und die Drucksensoren sind an den Kopplungsmodulen angeordnet.

Eine Aufgabe der Erfindung besteht darin, eine kostengünstige und kompakte Sensorlösung bereitzustellen zur Erfassung von mehreren Druckkanälen.

Die Aufgabe wird gemäß Anspruch 1 gelöst durch einen Drucksensor mit einem Gehäuse mit einer Steuer- und Auswerteeinheit, wobei an dem Gehäuse des Drucksensors eine Vielzahl von Druckanschlüssen angeordnet sind, wobei jedem Druckanschluss eine Druckmesszelle zugeordnet ist, wobei die Druckmesszellen mit der Steuer- und Auswerteeinheit verbunden sind, wobei der Drucksensor mindestens eine digitale Ausgabeschnittstelle aufweist, wobei mindestens ein Druckanschluss ein Anschluss zum Einschieben einer Druckleitung ist, wobei die Druckleitung ohne Werkzeuge montierbar ist und die Druckleitung von einer Dichtung des Druckanschlusses umschlossen wird und gegen ein Herausziehen gesichert ist.

Der erfindungsgemäße Drucksensor kann dort eingesetzt werden, wo eine große Anzahl von Druckmessungen auf engstem Raum erfolgen muss. Dabei sind beispielsweise eine Vielzahl von Druckmessungen von beispielsweise 4, 8, 16, 32 oder mehr einzelne parallele Druckmessungen möglich.

Ein Beispiel für eine solche Anwendung bzw. Applikation ist eine Matrix aus pneumatischen Vakuumgreifern. Diese Greifer sind beispielsweise in einem Raster von 4 × 8 angeordnet. Eine solche Anlage erhält die Rückmeldung, welcher Greifvorgang erfolgreich durchgeführt wurde.

Eine weitere Anwendung ergibt sich aus dem Kontext von Industrie 4.0. Dabei ist die Aufnahme von zusätzlichen Messdaten relevant, um Rückschlüsse über den Zustand der Anlage und deren Komponenten zu erhalten. Auch hier ist erfindungsgemäß eine einfache und zentrale Bereitstellung von vielen Druckmesspunkten ermöglicht.

Gemäß der Erfindung wird nur die Datenerfassung in dem Drucksensor vervielfacht. Die Datenauswertung und Datenausgabe mittels der Steuer- und Auswerteeinheit sowie das Gehäuse ist nur in einfacher Ausführung vorhanden. Dadurch können im gleichen Gehäuse mehrere Druckwerte bzw. Prozesswerte erfasst werden.

Bei der Nutzung lediglich einer einzigen Steuer- und Auswerteeinheit zur Datenauswertung sowie einer Datenausgabe ergeben sich deutliche Einsparpotentiale bei Herstellkosten sowie Platzverbrauch. Der Einsatz von einem Gehäuse für alle Komponenten vereinfacht den mechanischen Aufbau und reduziert die Anzahl der notwendigen Steckverbindungen und potentiellen Fehlerquellen. Die Unterbringung von mehreren Druckmessungen in einem Gehäuse ergibt also Skalierungsvorteile.

Der Druckanschluss ist ein Anschluss zum Einschieben einer Druckleitung, wobei die Druckleitung ohne Werkzeuge montierbar ist und die Druckleitung von einer Dichtung des Druckanschlusses umschlossen wird und gegen ein Herausziehen gesichert ist. Derartige Druckanschlüsse werden auch als Push-In-Fitting Anschluss bezeichnet. Eine Montage der anzuschließenden Druckleitung kann mit der bloßen Hand erfolgen, ohne dass Werkzeuge notwendig sind. Hierzu wird die Druckleitung in eine kreiszylinderförmige Aufnahme eingeschoben. Beim Einschieben wird die Druckleitung von mindestens einer ringförmigen Dichtung umschlossen und gleichzeitig verriegelt, beispielsweise mittels einem ringförmigen Verriegelungsring mit nach innen zeigenden Verriegelungslaschen, die von der eingeführten Druckleitung verdrängt bzw. umgebogen werden. Wird an dem Schlauch gezogen, verkeilen bzw. verhaken sich die Verriegelungslaschen in der Oberfläche der Druckleitung und verhindern ein Herausziehen.

Um die Druckleitung herauszuziehen, ist eine ringförmige Entriegelungsvorrichtung an dem Druckanschluss vorgesehen, die ebenfalls werkzeuglos mit der Hand betätigt werden kann. Die ringförmige Entriegelungsvorrichtung wird in Richtung des Druckanschlusses gedrückt, wodurch die Verriegelungslaschen des Verriegelungsrings von der Oberfläche der Druckleitung entfernt werden, wodurch die Druckleitung nicht mehr verriegelt ist und die Druckleitung mit der bloßen Hand entfernt und aus dem Druckanschluss herausgezogen werden kann.

Aufgrund der Einfachheit des Druckanschlusses und von flexiblen Druckleitungen können die Druckanschlüsse einfach verwendet werden, ohne dass die Druckanschlüsse exakt positioniert werden müssen und ohne dass Gewindeanschlüsse vorgesehen sind und der Anschluss ohne Werkzeuge durchgeführt werden kann.

Die Druckanschlüsse sind beispielsweise für eine Absolutdruckmessung vorgesehen. Dabei wird jede zum Druckanschluss zugehörige Druckmesszelle von der Steuer- und Auswerteeinheit einzeln eingelesen und der Messwert von der Steuer- und Auswerteeinheit auf der Ausgabeschnittstelle bereitgestellt bzw. ausgegeben.

Es ist jedoch vorzugsweise mit überwiegendem Anteil eine Relativdruckmessung vorgesehen, wobei die einzelnen Druckmesszellen relativ gegen den Umgebungsdruck messen. Diese relative Messung ist in der Pneumatik sehr nützlich.

Die Druckmesszelle wird beispielsweise als SMD-Bauteil bezogen und auf einer Leiterplatte bestückt. Eine integrierte Druckmesszelle kann wie folgt aussehen:
Die Adaption zum Prozess erfolgt mittels einer Aufnahme an der Oberseite des SMD-Bauteils, welche passgenau und druckdicht im Gehäuse integriert wird. Dazu wird beispielsweise ein O-Ring um eine Nase der Druckmesszelle gelegt, welcher in einer Aussparung im Gehäuse die Abdichtung zwischen Gehäuse insbesondere dem Druckanschluss und der SMD-Druckmesszelle übernimmt. Die Leiterplatte wird dann fest im Bereich des Prozessanschlusses mit dem Gehäuse verschraubt.

Diese Adaption muss die Lagetoleranzen zwischen Leiterplatte, Bestückungstoleranzen der SMD-Bauteile auf der Leiterplatte, Bauteiltoleranzen und Gehäusetoleranzen ausgleichen und gleichzeitig die Druckfestigkeit des Prozessdrucks sicherstellen.

Der erfindungsgemäße Drucksensor mit dem Gehäuse und der Vielzahl von Druckanschlüssen ist eine kompakte Vorrichtung, die weniger Bauraum notwendig macht als Einzelsensoren in einzelnen Gehäusen nach dem Stand der Technik. Der erfindungsgemäße Drucksensor ist günstig in der Herstellung und damit preiswerter für Anwender verfügbar. Weiter ist eine Integration also ein Einbau in eine Anlage einfacher, da weniger Verdrahtungsaufwand und weniger Montageaufwand erforderlich ist. Weiter ist der Drucksensor weniger fehleranfällig, da weniger Einzelkomponenten verbaut werden müssen. Weiter ist auch ein geringerer Parametrieraufwand notwendig, da nur eine einzige Steuer- und Auswerteeinheit notwendig ist.

Erfindungsgemäß ist mindestens ein weiterer Druckanschluss ein G¼ IG, G¼ AG oder ein ¼" NPT Druckanschluss des Drucksensors. Damit werden am Drucksensor unterschiedliche Anschlüsse bereitgestellt, wodurch der Drucksensor vielseitiger einsetzbar ist.

Ein G ¼ IG Anschluss ist ein Anschluss mit einem ¼ Zoll Innengewinde für einen Hochdruckanschluss. Durch die Innengewindeverschraubung wird eine stabile, jedoch einfach zu lösende und für hohe Drücke geeigneter Druckanschluss bereitgestellt.

Ein G ¼ AG Anschluss ist ein Anschluss mit einem ¼ Zoll Außengewinde für einen Hochdruckanschluss.

Ein ¼" NPT Anschluss ist ein Anschluss mit einem ¼ Zoll Außengewinde für einen Hochdruckanschluss. Durch die Außengewindeverschraubung wird eine stabile, jedoch einfach zu lösende und für hohe Drücke geeigneter Druckanschluss bereitgestellt. Ein solcher Hochdruckanschluss kann für Drücke bis zu mehreren hundert Bar Druck ausgelegt sein.

Erfindungsgemäß sind verschiedene Druckanschlüsse verschiedenen Druckbereichen zugeordnet. Dadurch können mit einem einzigen Drucksensor verschiedene Druckbereiche ausgewertet und überwacht werden. Dadurch ist der Drucksensor vielseitig einsetzbar.

In Weiterbildung der Erfindung weist mindestens ein erster Druckbereich den Bereich von 0 bis 10 bar und mindestens ein zweiter Druckbereich den Bereich von 0 bis 16 bar auf. Ein Druckbereich von 0 bis 10 bar ist beispielsweise der meistgewählte Druckbereich für Pneumatikanwendungen in Maschinen. Üblicherweise beträgt der Druck in einer Anlage 6 bis 7 bar. Um auftretende Druckspitzen zu beherrschen, sollte meist 0 bis 10 bar gewählt werden, um einen robusteren Drucksensor zu haben. Ein Druckbereich mit 0 bis 16 bar kommt in der Pneumatikversorgung vor, d.h. vor den Druckminder-Einrichtungen der einzelnen Anlagen.

In Weiterbildung der Erfindung ist zwischen zwei Druckanschlüssen eine Differenzdruckmessung durchführbar.

Dabei werden beispielsweise zwei Druckanschlüsse bzw. zwei Druckkanäle zur Differenzdruckmessung herangezogen. Dabei erfolgt beispielsweise eine digitale Differenzdruckmessung, wobei zwei Druckkanäle bzw. zwei Druckmesszellen einen digitalen Differenzdruckmesswert jeweils als Absolutwert ergeben. Das wird auch "electrical differential pressure" genannt. Das ist beispielsweise für alle Druckanschlüsse möglich, wobei immer zwei Druckanschlüsse einen Differenzdruckkanal bilden. Der Differenzdruckkanal kann auch für alle Messbereiche vorgesehen sein.

Bei einer Differenzdruckmessung werden pro Druckkanal zwei Druckanschlüsse bzw. Prozessanschlüsse zur Verfügung gestellt. Der Drucksensor kann auch die Differenz zwischen beiden Prozessanschlüssen mit einer einzigen Druckmesszelle messen, also eine Relativmessung. Dies bietet im Gegensatz zur Absolutmessung den Vorteil, dass nur eine einzige Druckmesszelle pro Druckkanal notwendig ist. Der große Vorteil der Differenzdruckmessung mit einer Druckmesszelle ist, dass der Differenzdruck wesentlich genauer bestimmt werden kann, da die Fehler der Einzelmessungen nicht vorhanden sind und der Messbereich wesentlich kleiner gewählt werden kann. Eine Differenzdruckmessung mit zwei eigenständigen Druckmesszellen also jeweils eine Absolutdruckmessung ergibt eine höhere Messgenauigkeit.

Weiter kann eine einfache Durchflussmessung zwischen zwei Druckanschlüssen vorgesehen sein. Hierzu wird eine Blende zwischen den Druckanschlüssen angeordnet und die Druckmesszelle ist ausgebildet, eine Durchflussmenge zu ermitteln. Dies ist insbesondere für kleine Messbereiche von 0 bis 0,5 bar vorgesehen.

Beispielsweise ist als Differenzdruckmessung eine echte Differenzdruckmessung vorgesehen. Dabei wird eine Differenzdruckmesszelle als Druckmesszelle eingesetzt. Diese verfügt über zwei Druckanschlüsse und ermittelt den Differenzdruck zwischen diesen beiden Drücken. Diese Messung ist sehr präzise und auch für kleine Messbereiche anwendbar. Diese Ausgestaltung benötigt pro Druckkanal zwei Druckanschlüsse bzw. Prozessanschlüsse und spezielle Messzellen. Damit ist dieses Verfahren zwar technisch genauer, lässt sich jedoch nicht für klassische Relativdruckmessung einsetzen.

Bei einer digitalen Differenzdruckmessung werden zwei Relativdruckmesszellen als Druckmesszelle verwendet. Diese werden beide einzeln ausgewertet. Die Differenzbildung geschieht im Anschluss durch verrechnen der beiden Druckwerte. Im Vergleich zur echten Differenzdruckmessung können hier keine so genauen Messwerte erreicht werden. Damit eignet sich das Verfahren weniger für kleine Messbereiche. Die Funktion wird über die Auswertung beispielsweise eine Auswertesoftware umgesetzt. Damit kann das Produkt individuell auf Kundenwünsche angepasst werden.

Die genannte Differenzdruckmessung kann bei einer Durchflussmessung angewendet werden. Für diese Art der Durchflussmessung wird ein Differenzdruck benötigt. Dieser Differenzdruck wird zwischen zwei Messstellen erfasst, wobei sich eine Messstelle vor einer Blende beispielsweise eine definierte Störstelle oder eine Verjüngung im Messkanal und eine Messstelle nach der Blende befindet. In Kenntnis der Information über den Druckabfall sowie das Model, nämlich eine geometrische Ausgestaltung der Blende, kann man auf den Durchfluss schließen. Da der Differenzdruck hier sehr gering ausfällt, liefert eine echte Differenzdruckmessung bessere Ergebnisse.

Nach dem gleichen Prinzip funktioniert eine Filterüberwachung. Hier wird eine Druckmessung vor dem Filter und eine Druckmessung nach dem Filter durchgeführt. Durch die Verunreinigung des Filters setzt sich dieser zu und der Widerstand steigt. Der erhöhte Widerstand sorgt für einen größeren Druckabfall über den Filter.

Der Einsatz von Differenzdruckmesszellen ermöglicht bessere Ergebnisse für die Durchflussmessung sowie für eine Filterüberwachung.

In Weiterbildung der Erfindung ist die Ausgabeschnittstelle mindestens eine IO-Link Schnittstelle. Mit dem Namen IO-Link ist ein Kommunikationssystem zur Anbindung intelligenter Sensoren und Aktoren an ein Automatisierungssystem in der Norm IEC 61131-9 unter der Bezeichnung Single-drop digital communication interface for small sensors and actuators' (SDCI) normiert. Die Standardisierung umfasst dabei sowohl die elektrischen Anschlussdaten als auch ein digitales Kommunikationsprotokoll, über das die Sensoren und Aktoren mit dem Automatisierungssystem in Datenaustausch treten.

Ein IO-Link-System besteht aus einem IO-Link-Master und einem oder mehreren IO-Link-Geräten, also Sensoren, nämlich dem Drucksensor oder Aktoren. Der IO-Link-Master stellt die Schnittstelle beispielsweise zu einer überlagerten Steuerung (speicherprogrammierbare Steuerung, SPS) zur Verfügung und steuert die Kommunikation mit den angeschlossenen IO-Link-Geräten, insbesondere dem Drucksensor.

Ein IO-Link-Master kann einen oder mehrere IO-Link-Ports haben, an dem jeweils nur ein Device angeschlossen werden kann. Dies kann auch ein Hub sein, der als Konzentrator den Anschluss von klassisch schaltenden Sensoren und Aktoren ermöglicht.

Ein IO-Link-Gerät kann ein intelligenter Sensor, nämlich der Drucksensor, ein Aktor, ein Hub, oder aber bedingt durch die bidirektionale Kommunikation auch eine Mechatronik-Komponente z. B. ein Greifer oder ein Netzteil mit IO-Link-Anbindung sein. Intelligent heißt im Hinblick auf IO-Link, dass ein Gerät, also der Drucksensor Identifikationsdaten z. B. eine Typbezeichnung und eine Seriennummer oder Parameterdaten z. B. Empfindlichkeiten, Schaltverzögerungen oder Kennlinien besitzt, die über das IO-Link-Protokoll lesbar bzw. schreibbar sind. Das Ändern von Parametern kann damit z. T. im laufenden Betrieb durch die SPS erfolgen. Intelligent heißt aber auch, dass der Drucksensor detaillierte Diagnoseinformationen liefern kann.

Die Parameter der Sensoren, insbesondere des Drucksensors und der Aktoren sind geräte- und technologiespezifisch, daher gibt es für jedes Gerät Parameterinformationen in Form einer IODD (IO Device Description) mit der Beschreibungssprache XML.

Via IO-Link Prozessdaten können bis zu 32 Bytes abgebildet werden. Je nach Auflösung der übertragenen Druckwerte skaliert die Anzahl der möglichen Druckwerte im Prozessdatum. Die folgende Tabelle gibt einen Überblick über Beispielswerte:

| Auflösung Druckwerte im Prozessdatum | Maximale Anzahl Druckwerte im Prozessdatum (32bytes/256bit) | Mögliche Datentypen | Information |
|---|---|---|---|
| 32bit | 8 | Float32, Int32, Ulnt32, usw. | Druckwert |
| 24bit | 10 | Int24, Ulnt24, usw. | Druckwert |
| 16bit | 16 | Int16, Ulnt16, usw. | Druckwert |
| 8bit | 32 | Int8, Ulnt8, usw. | Druckwert |
| 1bit | 256 | Bool, usw. | Schaltzustand |

Wie bereits erwähnt, sind Handlingseinheiten mit vielen Druckmessstellen eine vorteilhafte Anwendung des mehrkanaligen Drucksensors. Dabei sitzt der Drucksensor direkt auf dem Greifer oder Roboterarm. An dieser Stelle der Handlingseinheit befindet sich auch eine Aktorik bzw. ein Stellglied, die von einer Maschinensteuerung angesteuert werden muss. Um den Verkabelungsaufwand zwischen Handlingseinheit und Steuerung weiter zu reduzieren, bietet der Drucksensor elektrische Ausgangssignale an.

Über eine Schnittstelle, insbesondere der IO-Link Schnittstelle, sind Parametereingänge für den Drucksensor vorgesehen, mit denen eine Steuerung die Ausgänge des Drucksensors schalten kann.

Mit den Ausgangssignalen können Pneumatikventile oder elektrische Aktoren geschaltet werden. Es können zusätzliche digitale Eingangssignale vorteilhaft sein, um weitere Sensorsignale wie beispielsweise die Lageinformation von Greifern auszuwerten.

Jedoch kann der Drucksensor beispielsweise auch digitale Eingänge und digitale Ausgänge aufweisen. Verfügt der Drucksensor beispielsweise über die IO-Link Schnittstelle und beispielsweise acht digitale Eingänge und Ausgänge, dann kann ein Anwender über IO-Link diese acht Eingänge und Ausgänge einlesen bzw. steuern.

In Weiterbildung der Erfindung ist eine Ausgabeschnittstelle mindestens eine Ethernet Schnittstelle.

Ethernet ist eine Technik, die Software (Protokolle usw.) und Hardware (Kabel, Verteiler, Netzwerkkarten usw.) für kabelgebundene Datennetze spezifiziert und auch als LAN-Technik bezeichnet wird. Sie ermöglicht den Datenaustausch in Form von Datenframes zwischen den in einem lokalen Netz (LAN) angeschlossenen Geräten, nämlich dem Drucksensor und anderen Geräten, wie z. B. einer übergeordneten Steuerung. Derzeit sind Übertragungsraten von 1, 10, 100 Megabit/s (Fast Ethernet), 1000 Megabit/s (Gigabit-Ethernet), 2,5, 5, 10, 40, 50, 100, 200 und 400 Gigabit/s spezifiziert.

Die Ethernet-Protokolle umfassen Festlegungen für Kabeltypen und Stecker sowie für Übertragungsformen, nämlich den Signalen auf der Bitübertragungsschicht sowie Paketformate. Im OSI-Modell ist mit Ethernet sowohl die physische Schicht (vgl. OSI Layer 1) als auch die Data-Link-Schicht (vgl. OSI Layer 2) festgelegt. Ethernet entspricht weitestgehend der IEEE-Norm 802.3.

Ein Ethernet-Gerät kann ein intelligenter Sensor, nämlich der Drucksensor, ein Aktor, ein Hub, oder aber bedingt durch die bidirektionale Kommunikation auch eine Mechatronik-Komponente z. B. ein Greifer mit Ethernet-Anbindung sein. Intelligent heißt im Hinblick auf ein Ethernet-Gerät, dass ein Gerät, also der Drucksensor Identifikationsdaten z. B. eine Typbezeichnung und eine Seriennummer oder Parameterdaten z. B. Empfindlichkeiten, Schaltverzögerungen oder Kennlinien besitzt, die über das Ethernet-Protokoll lesbar bzw. schreibbar sind. Das Ändern von Parametern kann damit z. T. im laufenden Betrieb durch die SPS erfolgen. Intelligent heißt aber auch, dass der Drucksensor detaillierte Diagnoseinformationen liefern kann.

Die Parameter der Sensoren, insbesondere des Drucksensors und der Aktoren sind geräte- und technologiespezifisch, daher gibt es für jedes Gerät Parameterinformationen in Form einer Gerätebeschreibung mit der Beschreibungssprache XML Für Überwachungsanwendungen wären hier nicht echtzeitfähige Protokolle wie http, MQTT, OPC UA und Modbus vorgesehen.

In Weiterbildung der Erfindung ist eine Ausgabeschnittstelle mindestens eine Feldbusschnittstelle. Ein Feldbus ist ein Bussystem, das in einer Anlage Feldgeräte wie den Drucksensor oder andere Sensoren, Messfühler und Stellglieder bzw. Aktoren zwecks Kommunikation mit einem Automatisierungsgerät verbindet. Wenn mehrere Kommunikationsteilnehmer ihre Nachrichten über dieselbe Leitung senden, dann muss festgelegt sein, wer mit welcher Kennung was, nämlich Messwerte und Befehl wann auf dem Feldbus überträgt. Hierfür sind normierte Protokolle vorgesehen.

Vorgesehene Feldbusse sind beispielsweise Profibus, Interbus, CANopen, EtherCAT, Ethernet/IP, PROFINET usw.

In Weiterbildung der Erfindung sind an dem Gehäuse mindestens Bedientasten angeordnet. Mit den Bedientasten kann der Drucksensor einfach bedient, parametriert bzw. konfiguriert werden. Beispielsweise sind die Bedientasten als Folientasten oder kapazitive Tasten oder ähnliches ausgebildet.

In Weiterbildung der Erfindung ist an dem Gehäuse mindestens ein flächiges Anzeigedisplay angeordnet. Das flächige Anzeigedisplay ist beispielsweise räumlich den Bedientasten zugeordnet. Das Anzeigedisplay und die Bedientasten bilden zusammen ein Bedieninterface zur Eingabe von Parametern oder Konfigurationen und ebenfalls zur Ausgabe von Diagnoseinformationen.

In Weiterbildung der Erfindung ist die Steuer- und Auswerteeinheit programmierbar. Dazu weist die Steuer- und Auswerteeinheit einen Speicher auf. Insbesondere weist die Steuer- und Auswerteeinheit auch einen zusätzlichen Programmspeicher auf, um Anwenderprogramme abzuspeichern und auszuführen. Die Anwenderprogramme können auf der Steuer- und Auswerteeinheit des Drucksensors ausgeführt werden. So können individuelle Programme des Anwenders bzw. Kunden auf dem Drucksensor einfach integriert werden. Damit können die Ausgangssignale auf der digitalen Ausgabeschnittstelle bereits nach dem Anwenderprogramm generiert werden.

Jedoch kann es auch vorgesehen sein, dass der Drucksensor auch über die ohnehin vorhandene Firmware in der Steuer- und Auswerteeinheit programmierbar ist. Hierzu kann eine webbasierte bzw. browserbasierte Programmieroberfläche vorgesehen sein.

In Weiterbildung der Erfindung ist in dem Gehäuse mindestens ein Temperatursensor angeordnet, wobei der Temperatursensor mit der Steuer- und Auswerteeinheit verbunden ist.

Hierbei kann beispielsweise die Prozesstemperatur erfasst werden. Beispielsweise kann direkt die Temperatur des Druckmediums erfasst werden, wodurch nützliche Zusatzinformationen über den Prozess zur Verfügung stehen.

Beispielsweise kann auch die Umgebungstemperatur erfasst werden. Damit steht ebenfalls ein zusätzlicher nützlicher Prozessparameter zur Verfügung.

Die Temperatur bzw. die Temperaturen werden beispielsweise kontinuierlich bzw. zyklisch erfasst und ausgewertet.

In Weiterbildung der Erfindung ist in dem Gehäuse mindestens ein Vibrationssensor angeordnet, wobei der Vibrationssensor mit der Steuer- und Auswerteeinheit verbunden ist.

Der Vibrationssensor ist beispielsweise direkt mit dem Gehäuse des Drucksensors verbunden. Damit können verursachte Vibrationen des Prozesses aufgenommen werden und analysiert werden.

In Weiterbildung der Erfindung ist der Druckanschluss der Druckmesszellen über einen Schlauch mit dem Gehäuse verbunden, wobei mehrere Druckmesszellen auf einer gemeinsamen Leiterplatte befestigt sind.

Durch eine flexible Verbindung zwischen Druckmesszelle und Gehäuse, beispielsweise über den Schlauch, können die Toleranzen zwischen PCB und Gehäuse ausgeglichen werden. Insbesondere bei großen Temperaturänderungen können somit entstehende mechanische Verschiebungen ausgeglichen werden.

In Weiterbildung der Erfindung ist der Druckanschluss der Druckmesszelle direkt mit dem Gehäuse verbunden und jede Druckmesszelle auf einer jeweils eigenen Leiterplatte angeordnet.

Hier wird jede Druckmesszelle mit ihrem Prozessanschluss im Gehäuse direkt verschraubt. Die Verbindung einer Druckmesszellenleiterplatte sowie einer Grundmodulleiterplatte erfolgt beispielsweise via Steckverbinder oder Flachbandkabel, welche einen Toleranzausgleich ermöglichen.

Dadurch wird eine kaskadierbare Lösung bereitgestellt, mit der sich Drucksensoren mit einer unterschiedlichen Anzahl von Druckanschlüssen realisieren lassen bei identischem internen Aufbau. Dadurch können viele verschiedene Varianten von Drucksensoren gebildet werden. Hierzu wird zur Fertigung des Drucksensors ein Grundmodul bereitgestellt, welches mit einer Anzahl von Druckmesszellen verbunden bzw. kombiniert wird. Damit ist ein Baukastensystem gebildet.

In Weiterbildung der Erfindung ist der Druckanschluss der Druckmesszellen direkt mit dem Gehäuse verbunden, wobei mehrere Druckmesszellen auf einer gemeinsamen Leiterplatte befestigt sind, wobei die Leiterplatte Verbindungsstege aufweist zwischen den Leiterplattenteilen der Druckmesszellen.

Hier werden alle Komponenten auf einer Leiterplatte bestückt. Der Toleranzausgleich funktioniert beispielsweise durch mechanische Entlastung der Leiterplatte durch Einfräsungen, wodurch die übrig gebliebene Verbindung den Verbindungssteg bildet, oder durch teilweise flexible Leiterplatten z.B. an den Verbindungstellen, wodurch die Verbindungsstege gebildet werden.

Jedoch kann es auch vorgesehen sein, ausschließlich komplett flexible Leiterplatten zu verwenden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine schematische Darstellung eines Drucksensors;
- Figur 2: eine weitere schematische Darstellung eines Drucksensors;
- Figur 3: eine schematische Darstellung eines Druckanschlusses;
- Figur 4: eine schematische Darstellung eines Drucksensors in einer Anwendung;
- Figur 5: ein Gehäuse eines Drucksensors;
- Figur 6: ein Gehäuse eines Drucksensors mit Bedientasten und einem Anzeigedisplay;
- Figur 7: Beispiele von Druckmesszellen;
- Figur 8: eine schematische Darstellung einer Leiterplatte mit einer Druckmesszelle;
- Figur 9: eine schematische Darstellung einer Leiterplatte mit einer Druckmesszelle;
- Figur 10: eine schematische Darstellung von Leiterplatten mit Druckmesszellen;
- Figur 11: eine schematische Darstellung einer Leiterplatte mit Verbindungsstegen und Druckmesszellen.

In den nachfolgenden Figuren sind identische Teile mit identischen Bezugszeichen versehen.

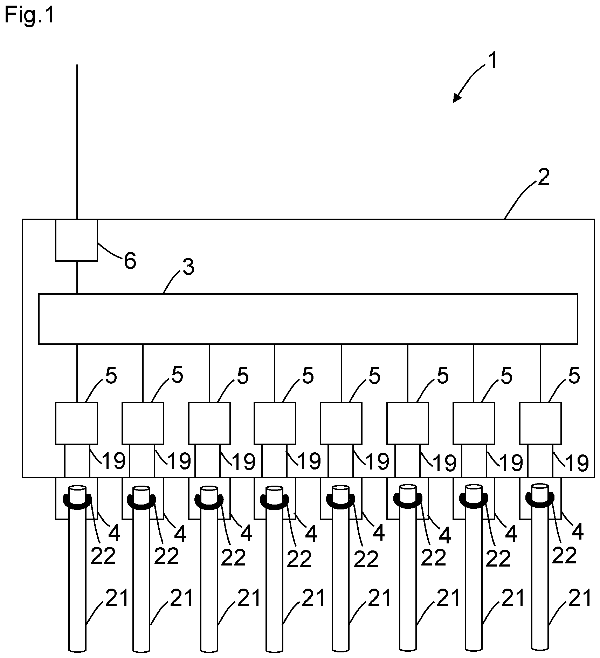

Figur 1 zeigt einen Drucksensor 1 mit einem Gehäuse 2 mit einer Steuer- und Auswerteeinheit 3, wobei an dem Gehäuse 2 des Drucksensors 1 eine Vielzahl von Druckanschlüssen 4 angeordnet sind, wobei jedem Druckanschluss 4 eine Druckmesszelle 5 zugeordnet ist, wobei die Druckmesszellen 5 mit der Steuer- und Auswerteeinheit 3 verbunden sind, wobei der Drucksensor 1 mindestens eine digitale Ausgabeschnittstelle 6 aufweist, wobei mindestens ein Druckanschluss 4 ein Anschluss zum Einschieben einer Druckleitung 21 ist, wobei die Druckleitung 21 ohne Werkzeuge montierbar ist und die Druckleitung 21 von einer Dichtung 22 des Druckanschlusses 4 umschlossen wird und gegen ein Herausziehen gesichert ist.

Dabei sind beispielsweise eine Vielzahl von Druckmessungen von beispielsweise vier, acht, sechzehn oder zweiunddreißig oder mehr einzelne parallele Druckmessungen möglich. Gemäß Figur 1 sind beispielsweise acht Druckanschlüsse 4 dargestellt.

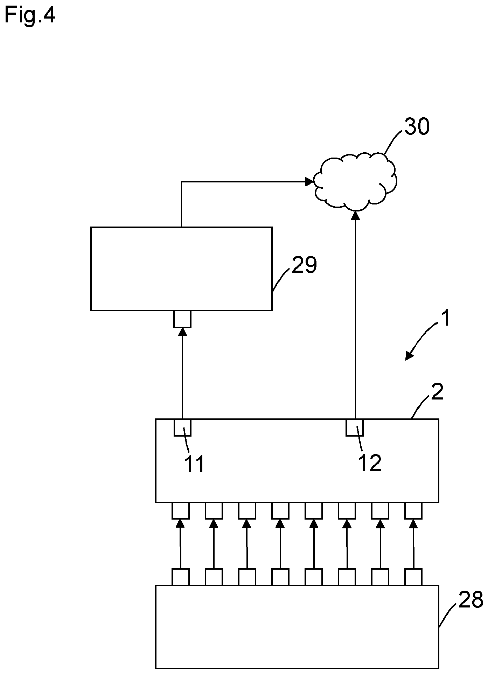

Figur 4 zeigt den Drucksensor 1 in einer Anwendung mit einem Vakuumgreifer 28, einer speicherprogrammierbaren Steuerung 29 und einer Cloud 30. Ein Beispiel für eine solche Anwendung bzw. Applikation ist eine Matrix aus pneumatischen Vakuumgreifern. Diese Greifer sind beispielsweise in einem Raster von 4 x 8 angeordnet. Eine solche Anlage erhält die Rückmeldung, welcher Greifvorgang erfolgreich durchgeführt wurde.

Die Datenauswertung und Datenausgabe mittels der Steuer- und Auswerteeinheit 3 sowie das Gehäuse 2 ist nur in einfacher Ausführung vorhanden. Dadurch können im gleichen Gehäuse 2 mehrere Druckwerte bzw. Prozesswerte erfasst werden.

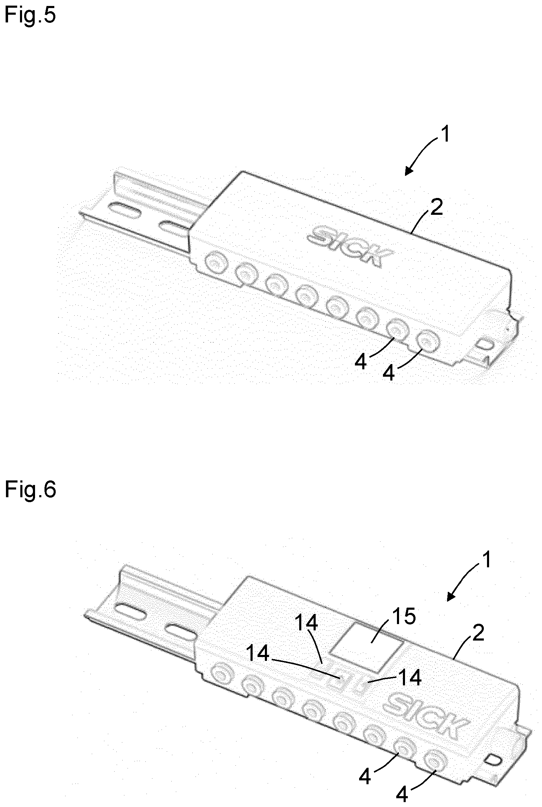

Figur 5 zeigt beispielsweise ein Gehäuse 2 mit den Druckanschlüssen 4 auf einer Montage- bzw. Hutschiene.

Figur 6 zeigt beispielsweise ein Gehäuse 2 mit den Druckanschlüssen 4 auf einer Montage- bzw. Hutschiene, wobei das Gehäuse ein Anzeigedisplay 15 und Bedientasten 14 aufweist. Mit den Bedientasten 14 kann der Drucksensor 1 einfach bedient, parametriert bzw. konfiguriert werden. Beispielsweise sind die Bedientasten 14 als Folientasten oder kapazitive Tasten oder ähnliches ausgebildet. Das flächige Anzeigedisplay 15 ist beispielsweise räumlich den Bedientasten 14 zugeordnet. Das Anzeigedisplay 15 und die Bedientasten 14 bilden zusammen ein Bedieninterface zur Eingabe von Parametern oder Konfigurationen und beispielsweise ebenfalls zur Ausgabe von Diagnoseinformationen, Prozessdaten, Druckwerten und/oder Temperaturwerten.

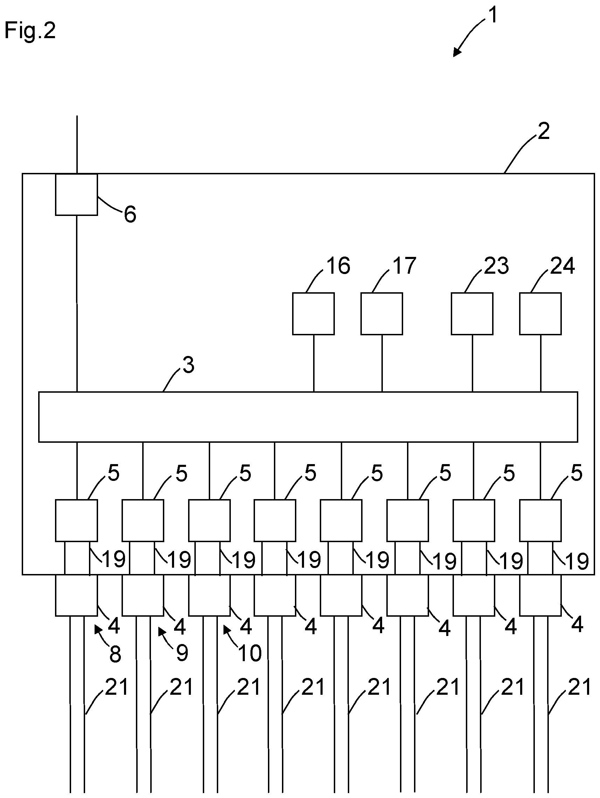

Gemäß Figur 2 ist die Steuer- und Auswerteeinheit 3 programmierbar. Dazu weist die Steuer- und Auswerteeinheit 3 einen Speicher 23 auf. Insbesondere weist die Steuer- und Auswerteeinheit 3 auch einen zusätzlichen Programmspeicher 24 auf, um Anwenderprogramme abzuspeichern und auszuführen. Die Anwenderprogramme können auf der Steuer- und Auswerteeinheit 3 des Drucksensors 1 ausgeführt werden. So können individuelle Programme des Anwenders bzw. Kunden auf dem Drucksensor 1 einfach integriert werden. Damit können die Ausgangssignale auf der digitalen Ausgabeschnittstelle bereits nach dem Anwenderprogramm generiert werden.

Jedoch kann es auch vorgesehen sein, dass der Drucksensor 1 auch über die ohnehin vorhandene Firmware in der Steuer- und Auswerteeinheit 3 programmierbar ist. Hierzu kann eine webbasierte bzw. browserbasierte Programmieroberfläche vorgesehen sein.

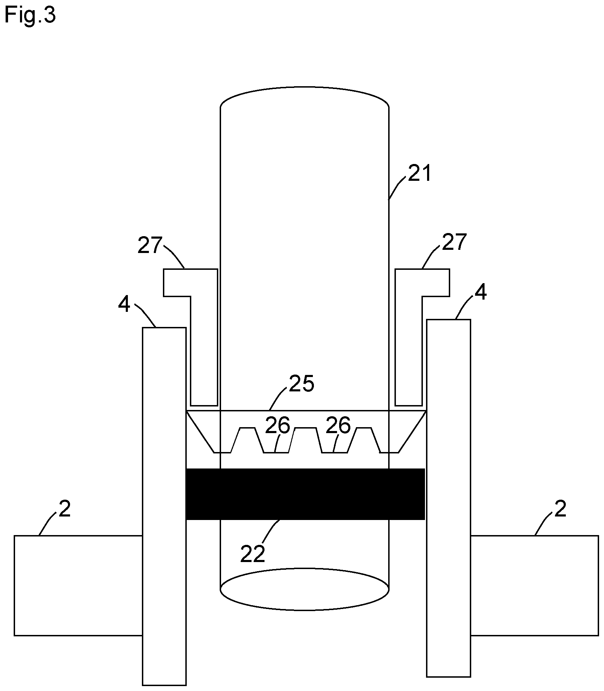

Der Druckanschluss 4 ist gemäß Figur 3 ein Anschluss zum Einschieben einer Druckleitung 21, wobei die Druckleitung 21 ohne Werkzeuge montierbar ist und die Druckleitung von einer Dichtung 22 des Druckanschlusses 4 umschlossen wird und gegen ein Herausziehen gesichert ist. Derartige Druckanschlüsse 4 werden auch als Push-In-Fitting Anschluss bezeichnet. Eine Montage der anzuschließenden Druckleitung 21 kann mit der bloßen Hand erfolgen, ohne dass Werkzeuge notwendig sind. Hierzu wird die Druckleitung 21 in eine kreiszylinderförmige Aufnahme eingeschoben. Beim Einschieben wird die Druckleitung 21 von mindestens einer ringförmigen Dichtung 22 umschlossen und gleichzeitig verriegelt, beispielsweise mittels einem ringförmigen Verriegelungsring 25 mit nach innen zeigenden Verriegelungslaschen 26, die von der eingeführten Druckleitung 21 verdrängt bzw. umgebogen werden. Wird an dem Schlauch gezogen, verkeilen bzw. verhaken sich die Verriegelungslaschen 26 in der Oberfläche der Druckleitung 21 und verhindern ein Herausziehen.

Um die Druckleitung 21 herauszuziehen, ist eine ringförmige Entriegelungsvorrichtung 27 an dem Druckanschluss 4 vorgesehen, die ebenfalls werkzeuglos mit der Hand betätigt werden kann. Die ringförmige Entriegelungsvorrichtung 27 wird in Richtung des Druckanschlusses 4 gedrückt, wodurch die Verriegelungslaschen 26 des Verriegelungsrings 25 von der Oberfläche der Druckleitung 21 entfernt werden, wodurch die Druckleitung 21 nicht mehr verriegelt ist und die Druckleitung 21 mit der bloßen Hand entfernt und aus dem Druckanschluss 4 herausgezogen werden kann.

Aufgrund der Einfachheit des Druckanschlusses 4 und von flexiblen Druckleitungen 21 können die Druckanschlüsse 4 einfach verwendet werden, ohne dass die Druckanschlüsse 4 exakt positioniert werden müssen und ohne dass Gewindeanschlüsse vorgesehen sind und der Anschluss ohne Werkzeuge durchgeführt werden kann.

Die Druckanschlüsse 4 sind vorzugsweise für eine Relativdruckmessung vorgesehen. Dabei erfolgt eine Relativdruckmessung relativ zur Umgebung. Dabei wird jede zum Druckanschluss 4 zugehörige Druckmesszelle 5 von der Steuer- und Auswerteeinheit 3 einzeln eingelesen und der Messwert von der Steuer- und Auswerteeinheit 3 auf der Ausgabeschnittstelle 6 bereitgestellt bzw. ausgegeben. Zwischen Einlesen und Ausgabe erfolgt beispielsweise noch eine Verarbeitung, Filterung, Skalierung und/oder Kalibrierung.

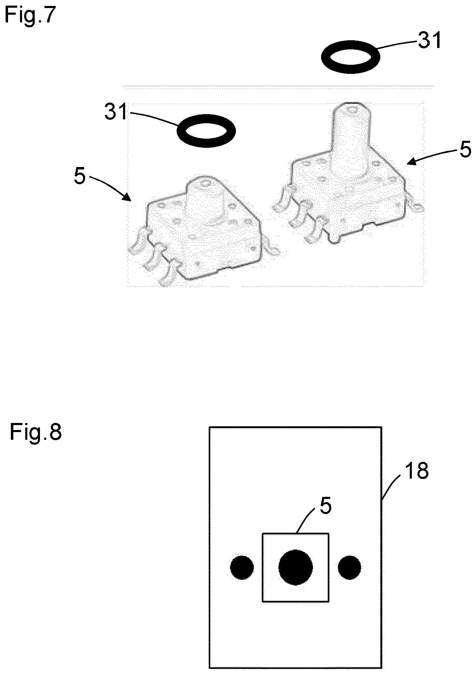

Die Druckmesszelle 5 wird beispielsweise gemäß Figur 7 als SMD-Bauteil bezogen und auf einer Leiterplatte 18 gemäß Figur 8 bestückt. Eine integrierte Druckmesszelle 5 kann wie folgt aussehen:
Die Adaption zum Prozess erfolgt mittels einer Aufnahme an der Oberseite des SMD-Bauteils gemäß Figur 7, welche passgenau und druckdicht im Gehäuse 2 integriert wird. Dazu wird beispielsweise ein O-Ring 31 um eine Nase der Druckmesszelle 5 gelegt, welcher in einer Aussparung im Gehäuse 2 die Abdichtung zwischen Gehäuse 2 insbesondere dem Druckanschluss 4 und der SMD-Druckmesszelle übernimmt. Die Leiterplatte 18 wird dann fest im Bereich des Prozessanschlusses mit dem Gehäuse 2 verschraubt.

Diese Adaption muss die Lagetoleranzen zwischen Leiterplatte 18, Bestückungstoleranzen der SMD-Bauteile auf der Leiterplatte 18, Bauteiltoleranzen und Gehäusetoleranzen ausgleichen und gleichzeitig die Druckfestigkeit des Prozessdrucks sicherstellen.

Gemäß Figur 2 ist mindestens ein weiterer Druckanschluss ein G1/4 IG 8, G1/4 AG 9 oder ¼" NPT 10 Druckanschluss 4 des Drucksensors 1. Damit werden am Drucksensor 1 unterschiedliche Anschlüsse bereitgestellt, wodurch der Drucksensor 1 vielseitiger einsetzbar ist.

Ein G ¼ IG 8 Anschluss ist ein Anschluss mit einem ¼ Zoll Innengewinde für einen Hochdruckanschluss. Ein G ¼ AG 9 Anschluss ist ein Anschluss mit einem ¼ Zoll Außengewinde für einen Hochdruckanschluss. Ein ¼" NPT 10 Anschluss ist ein Anschluss mit einem ¼ Zoll Außengewinde für einen Hochdruckanschluss.

Gemäß Figur 2 sind beispielsweise verschiedene Druckanschlüsse 4 verschiedenen Druckbereichen zugeordnet. Dadurch können mit einem einzigen Drucksensor 1 verschiedene Druckbereiche ausgewertet und überwacht werden. Beispielsweise weist mindestens ein erster Druckbereich den Bereich von 0 bis 10 bar und mindestens ein zweiter Druckbereich den Bereich von 0 bis 16 bar auf. Weiter gibt es beispielsweise noch Druckbereiche von 0 bis 1 bar, 0 bis 6 bar, 0 bis 16 bar, -1 bis 0 bar, -1 bis 1 bar oder -1 bis 10 bar.

Beispielsweise ist zwischen zwei Druckanschlüssen 4 eine Differenzdruckmessung durchführbar. Dabei werden beispielsweise zwei Druckanschlüsse 4 bzw. zwei Drucckanäle zur Differenzdruckmessung herangezogen. Dabei erfolgt beispielsweise eine digitale Differenzdruckmessung, wobei zwei Druckkanäle bzw. zwei Druckmesszellen 5 einen digitalen Differenzdruckmesswert jeweils als Absolutwert ergeben. Das ist beispielsweise für alle Druckanschlüsse 4 möglich, wobei immer zwei Druckanschlüsse 4 einen Differenzdruckkanal bilden. Der Differenzdruckkanal kann auch für alle Messbereiche vorgesehen sein.

Bei einer Differenzdruckmessung werden beispielsweise pro Druckkanal zwei Druckanschlüsse 4 bzw. zwei Prozessanschlüsse zur Verfügung gestellt. Der Drucksensor 1 kann auch die Differenz zwischen beiden Prozessanschlüssen mit einer einzigen Druckmesszelle 5 messen, also eine Relativmessung. Dies bietet im Gegensatz zur Absolutmessung den Vorteil, dass nur eine einzige Druckmesszelle 5 pro Druckkanal notwendig ist. Eine Differenzdruckmessung mit zwei eigenständigen Druckmesszellen 5, also jeweils eine Absolutdruckmessung, ergibt eine höhere Messgenauigkeit.

Weiter kann eine einfache Durchflussmessung zwischen zwei Druckanschlüssen 4 vorgesehen sein. Hierzu wird eine Blende zwischen den Druckanschlüssen 4 angeordnet und die Druckmesszelle 5 ist ausgebildet, eine Durchflussmenge zu ermitteln. Dies ist insbesondere für kleine Messbereiche von 0 bis 0,5 bar vorgesehen.

Gemäß Figur 4 ist die Ausgabeschnittstelle beispielsweise eine IO-Link Schnittstelle 11. Via IO-Link Prozessdaten können bis zu 32 Bytes abgebildet werden. Je nach Auflösung der übertragenen Druckwerte skaliert die Anzahl der möglichen Druckwerte im Prozessdatum.

Wie bereits erwähnt, sind Handlingseinheiten mit vielen Druckmessstellen eine vorteilhafte Anwendung des mehrkanaligen Drucksensors 1. Dabei sitzt der Drucksensor 1 direkt auf dem Greifer oder Roboterarm. An dieser Stelle der Handlingseinheit befindet sich auch eine Aktorik, die von einer Maschinensteuerung angesteuert werden muss. Um den Verkabelungsaufwand zwischen Handlingseinheit und Steuerung weiter zu reduzieren, bietet der Drucksensor 1 die elektrischen Ausgangssignale der IO-Link Schnittstelle 11 an.

Über eine Schnittstelle, insbesondere der IO-Link Schnittstelle 11, sind Parametereingänge für den Drucksensor 1 vorgesehen, mit denen eine Steuerung die Ausgänge des Drucksensors 1 schalten kann.

Mit den Ausgangssignalen der IO-Link Schnittstelle 11 können Pneumatikventile oder elektrische Aktoren geschaltet werden. Es können zusätzliche digitale Eingangssignale vorteilhaft sein, um weitere Sensorsignale wie beispielsweise die Lageinformation von Greifern auszuwerten.

Gemäß Figur 4 ist beispielsweise eine weitere Ausgabeschnittstelle eine Ethernet Schnittstelle 12.

Ein Ethernet-Gerät kann ein intelligenter Sensor, nämlich der Drucksensor 1, ein Aktor, ein Hub, oder aber bedingt durch die bidirektionale Kommunikation auch eine Mechatronik-Komponente z. B. ein Greifer mit Ethernet-Anbindung sein. Intelligent heißt im Hinblick auf ein Ethernet-Gerät, dass ein Gerät, also der Drucksensor 1 Identifikationsdaten z. B. eine Typbezeichnung und eine Seriennummer oder Parameterdaten z. B. Empfindlichkeiten, Schaltverzögerungen oder Kennlinien besitzt, die über das Ethernet-Protokoll lesbar bzw. schreibbar sind. Das Ändern von Parametern kann damit z. T. im laufenden Betrieb durch die SPS erfolgen. Intelligent heißt aber auch, dass der Drucksensor 1 detaillierte Diagnoseinformationen liefern kann.

Optional ist die Ausgabeschnittstelle eine Feldbusschnittstelle. Vorgesehene Feldbusse sind beispielsweise Profibus, Interbus, CANopen usw.

Gemäß Figur 2 ist in dem Gehäuse mindestens ein Temperatursensor 16 angeordnet, wobei der Temperatursensor 16 mit der Steuer- und Auswerteeinheit 3 verbunden ist.

Hierbei kann beispielsweise die Prozesstemperatur erfasst werden. Beispielsweise kann direkt die Temperatur des Druckmediums erfasst werden, wodurch nützliche Zusatzinformationen über den Prozess zur Verfügung stehen.

Beispielsweise kann auch die Umgebungstemperatur erfasst werden. Damit liegt ebenfalls ein zusätzlicher nützlicher Prozessparameter zur Verfügung.

Die Temperatur bzw. die Temperaturen werden beispielsweise kontinuierlich bzw. zyklisch erfasst und ausgewertet.

Gemäß Figur 2 ist in dem Gehäuse ein Vibrationssensor 17 angeordnet, wobei der Vibrationssensor 17 mit der Steuer- und Auswerteeinheit 3 verbunden ist.

Der Vibrationssensor 17 ist beispielsweise direkt mit dem Gehäuse des Drucksensors 1 verbunden. Damit können verursachte Vibrationen des Prozesses aufgenommen werden und analysiert werden.

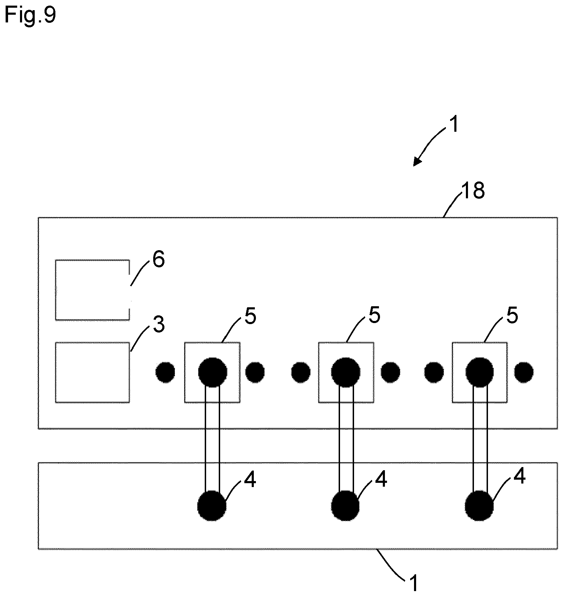

Gemäß Figur 2 ist der Druckanschluss 4 der Druckmesszellen 5 über einen Schlauch 19 mit dem Gehäuse 2 verbunden, wobei mehrere Druckmesszellen 5 auf einer gemeinsamen Leiterplatte 18 befestigt sind, gemäß Figur 9.

Durch eine flexible Verbindung zwischen Druckmesszelle 5 und Gehäuse 2, beispielsweise über den Schlauch 19, können Temperatureinflüsse und/oder Fertigungstoleranzen zwischen PCB und Gehäuse 2 ausgeglichen werden. Insbesondere bei großen Temperaturänderungen können somit entstehende mechanische Verschiebungen ausgeglichen werden.

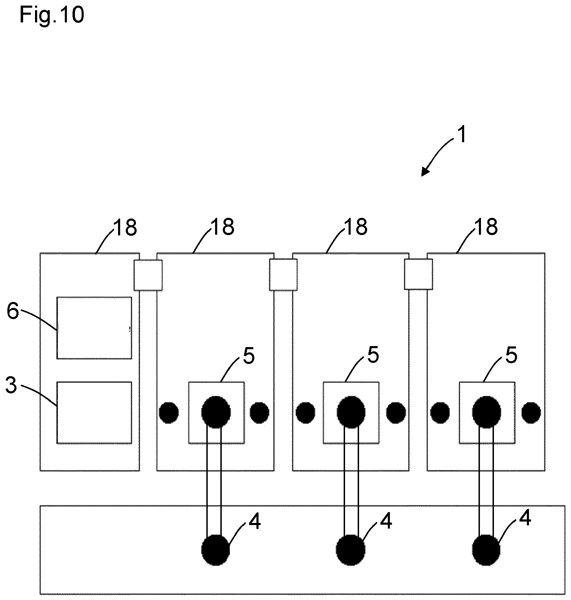

Gemäß Figur 10 ist der Druckanschluss 4 der Druckmesszelle 5 direkt mit dem Gehäuse verbunden und jede Druckmesszelle 5 auf einer jeweils eigenen Leiterplatte 18 angeordnet.

Hier wird jede Druckmesszelle 5 mit Ihrem Druckanschluss 4 bzw. Prozessanschluss im Gehäuse 2 direkt verschraubt. Die Verbindung einer Druckmesszellenleiterplatte sowie einer Grundmodulleiterplatte erfolgt beispielsweise via Steckverbinder oder Flachbandkabel, welche einen Toleranzausgleich ermöglichen.

Dadurch wird eine kaskadierbare Lösung bereitgestellt, mit der sich Drucksensoren 1 mit einer unterschiedlichen Anzahl von Druckanschlüssen 4 realisieren lassen bei identischem internen Aufbau. Dadurch können viele verschiedene Varianten von Drucksensoren 1 gebildet werden. Hierzu wird zur Fertigung des Drucksensors 1 ein Grundmodul bereitgestellt, welches mit einer Anzahl von Druckmesszellen 5 verbunden bzw. kombiniert wird. Damit ist ein Baukastensystem gebildet.

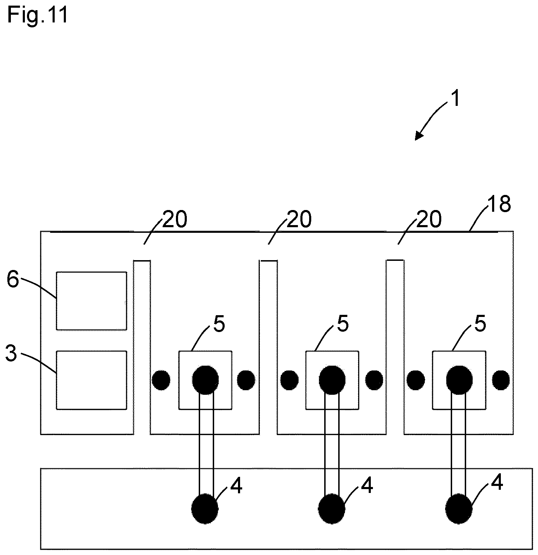

Gemäß Figur 11 ist der Druckanschluss 4 der Druckmesszellen 5 direkt mit dem Gehäuse 2 verbunden, wobei mehrere Druckmesszellen 5 auf einer gemeinsamen Leiterplatte 18 befestigt sind, wobei die Leiterplatte 18 Verbindungsstege aufweist zwischen den Leiterplattenteilen der Druckmesszellen 5.

Hier werden alle Komponenten auf einer Leiterplatte 18 bestückt. Der Toleranzausgleich funktioniert beispielsweise durch mechanische Entlastung der Leiterplatte 18 durch Einfräsungen, wodurch die übrig gebliebene Verbindung den Verbindungssteg 20 bildet, oder durch teilweise flexible Leiterplatten z.B. an den Verbindungstellen, wodurch die Verbindungsstege 20 gebildet werden.

Jedoch kann es auch vorgesehen sein, ausschließlich komplett flexible Leiterplatten 18 zu verwenden.

### Bezugszeichen:

1 Drucksensor
2 Gehäuse
3 Steuer- und Auswerteeinheit
4 Druckanschluss
5 Druckmesszelle
6 digitale Ausgabeschnittstelle
8 G1/4 IG
9 G1/4 AG
10 ¼" NPT
11 IO-Link Schnittstelle
12 Ethernetschnittstelle
14 Bedientasten
15 Anzeigedisplay
16 Temperatursensor
17 Vibrationssensor
18 Leiterplatte
19 Schlauch
20 Verbindungsstege
21 Druckleitung
22 Dichtung
23 Speicher
24 Programmspeicher
25 Verriegelungsring
26 Verriegelungslaschen
27 Entriegelungsvorrichtung
28 Vakuumgreifer
29 Speicherprogrammierbare Steuerung
30 Cloud
31 O-Ring

## Patentansprüche

1. Drucksensor (1) mit einem Gehäuse (2) mit einer Steuer- und Auswerteeinheit (3), wobei an dem Gehäuse (2) des Drucksensors (1) eine Vielzahl von Druckanschlüssen (4) angeordnet sind, wobei jedem Druckanschluss (4) eine Druckmesszelle (5) zugeordnet ist, wobei die Druckmesszellen (5) mit der Steuer- und Auswerteeinheit (3) verbunden sind, wobei der Drucksensor (1) mindestens eine digitale Ausgabeschnittstelle (6) aufweist, **dadurch gekennzeichnet, dass** mindestens ein Druckanschluss (4) ein Anschluss zum Einschieben einer Druckleitung (21) ist, wobei die Druckleitung (21) ohne Werkzeuge, mit der bloßen Hand montierbar ist und die Druckleitung (21) von einer Dichtung (22) des Druckanschlusses (4) umschlossen ist, und gegen ein Herausziehen gesichert ist, wobei mindestens ein weiterer Druckanschluss ein G1/4 IG (8), ein G1/4 AG (9) oder ein ¼"NPT (10) Druckanschluss (4) ist und verschiedene Druckanschlüsse (4) verschiedenen Druckbereichen zugeordnet sind.

2. Drucksensor (1) nach Anspruch 1, **dadurch gekennzeichnet, dass** ein erster Druckbereich den Bereich von 0 bis 10 bar und ein zweiter Druckbereich den Bereich von 0 bis 16 bar aufweist.

3. Drucksensor (1) nach mindestens einem der vorhergehenden Ansprüche, **dadurch gekennzeichnet, dass** zwischen zwei Druckanschlüssen (4) eine Differenzdruckmessung durchführbar ist.

4. Drucksensor (1) nach mindestens einem der vorhergehenden Ansprüche, **dadurch gekennzeichnet, dass** die Ausgabeschnittstelle (6) mindestens eine IO-Link Schnittstelle (11) ist.

5. Drucksensor (1) nach mindestens einem der vorhergehenden Ansprüche, **dadurch gekennzeichnet, dass** die Ausgabeschnittstelle (6) mindestens eine Ethernet Schnittstelle (12) ist.

6. Drucksensor (1) nach mindestens einem der vorhergehenden Ansprüche, **dadurch gekennzeichnet, dass** die Ausgabeschnittstelle (6) mindestens eine Feldbusschnittstelle ist.

7. Drucksensor (1) nach mindestens einem der vorhergehenden Ansprüche, **dadurch gekennzeichnet, dass** an dem Gehäuse mindestens (2) Bedientasten (14) angeordnet sind.

8. Drucksensor (1) nach mindestens einem der vorhergehenden Ansprüche, **dadurch gekennzeichnet, dass** an dem Gehäuse (2) mindestens ein flächiges Anzeigedisplay (15) angeordnet ist.

9. Drucksensor (1) nach mindestens einem der vorhergehenden Ansprüche, **dadurch gekennzeichnet, dass** die Steuer- und Auswerteeinheit (3) programmierbar ist.

10. Drucksensor (1) nach mindestens einem der vorhergehenden Ansprüche, **dadurch gekennzeichnet, dass** in dem Gehäuse (2) mindestens ein Temperatursensor (16) angeordnet ist, wobei der Temperatursensor (16) mit der Steuer- und Auswerteeinheit (3) verbunden ist.

11. Drucksensor (1) nach mindestens einem der vorhergehenden Ansprüche, **dadurch gekennzeichnet, dass** an in dem Gehäuse (2) mindestens ein Vibrationssensor (17) angeordnet ist, wobei der Vibrationssensor (17) mit der Steuer- und Auswerteeinheit (3) verbunden ist.

12. Drucksensor (1) nach mindestens einem der vorhergehenden Ansprüche, **dadurch gekennzeichnet, dass** der Druckanschluss (4) der Druckmesszellen (5) über einen Schlauch (19) mit dem Gehäuse (2) verbunden ist, wobei mehrere Druckmesszellen (5) auf einer gemeinsamen Leiterplatte (18) befestigt sind.

13. Drucksensor (1) nach mindestens einem der vorhergehenden Ansprüche, **dadurch gekennzeichnet, dass** der Druckanschluss (4) der Druckmesszelle (5) direkt mit dem Gehäuse (2) verbunden ist, und jede Druckmesszelle (5) auf einer jeweils eigenen Leiterplatte (18) angeordnet ist.

## Claims

1. A pressure sensor (1) having a housing (2) with a control and evaluation unit (3), wherein a plurality of pressure ports (4) are arranged at the housing (2) of the pressure sensor (1), wherein a pressure measuring cell (5) is associated with every pressure port (4), wherein the pressure measurement cells (5) are connected to the control and evaluation unit (3), and wherein the pressure sensor (1) has at least one digital output interface (6), wherein at least one pressure port (4) is a port for inserting a pressure line (21), with the pressure line (21) being installable without tools actuated by hand and with the pressure line (21) being surrounded by a seal (22) of the pressure port (4) and being secured against being pulled out wherein at least one further pressure port is a G¼ IG (8), G¼ AG (9) or ¼" NPT (10) pressure port (4) and different pressure ports (4) are associated with different pressure ranges.

2. The pressure sensor (1) in accordance with claim 1, wherein a first pressure range has the range from 0 to 10 bar and a second pressure range has the range from 0 to 16 bar.

3. The pressure sensor (1) in accordance to at least one of the preceding claims, wherein a differential pressure measurement can be carried out between two pressure ports (4).

4. The pressure sensor (1) in accordance to at least one of the preceding claims, wherein the output interface (6) is at least one IO link interface (11).

5. The pressure sensor (1) in accordance to at least one of the preceding claims, wherein the output interface (6) is at least one Ethernet interface screw (12).

6. The pressure sensor (1) in accordance to at least one of the preceding claims, wherein the output interface (6) is at least one fieldbus interface.

7. The pressure sensor (1) in accordance to at least one of the preceding claims, wherein at least control buttons (14) are arranged at the housing (2).

8. The pressure sensor (1) in accordance to at least one of the preceding claims, wherein at least one planar display (15) is arranged at the housing (2).

9. The pressure sensor (1) in accordance to at least one of the preceding claims, wherein the control and evaluation unit (3) is programmable.

10. The pressure sensor (1) in accordance to at least one of the preceding claims, wherein at least one temperature sensor (16) is arranged in the housing (2), with the temperature sensor (16) being connected to the control and evaluation unit (3).

11. The pressure sensor (1) in accordance to at least one of the preceding claims, wherein at least one vibration sensor (17) is arranged in the housing (2), with the vibration sensor (17) being connected to the control and evaluation unit (3).

12. The pressure sensor (1) in accordance to at least one of the preceding claims, wherein the pressure port (4) of the pressure measurement cells (5) is connected to the housing (2) via a tube (19), with a plurality of pressure measurement cells (5) being fastened to a common printed circuit board (18).

13. The pressure sensor (1) in accordance to at least one of the preceding claims, wherein the pressure port (4) of the pressure measurement cell (5) is directly connected to the housing (2) and every pressure measurement cell (5) is arranged on a respective separate printed circuit board (18).

## Revendications

1. Capteur de pression (1) comprenant un boîtier (2) avec une unité de commande et d'évaluation (3), dans lequel une pluralité de ports de pression (4) sont disposés sur le boîtier (2) du capteur de pression (1), dans lequel une cellule de mesure de pression (5) est associée à chaque port de pression (4), dans lequel les cellules de mesure de pression (5) sont connectées à l'unité de commande et d'évaluation (3), et dans lequel le capteur de pression (1) comprend au moins une interface de sortie numérique (6), **caractérisé en ce qu'**au moins un port de pression (4) est un port pour l'insertion d'une conduite de pression (21), la conduite de pression (21) pouvant être montée sans outils et á mains nues et la conduite de pression (21) étant entourée d'un joint (22) du port de pression (4) et étant protégée contre l'extraction dans lequel au moins un autre port de pression est un port de pression (4) G¼ IG (8), G¼ AG (9) ou ¼" NPT (10) et différents ports de pression (4) sont associés à différentes zones de pression.

2. Capteur de pression (1) selon la revendication 1, **caractérisé en ce qu'**une première zone de pression comprend la zone de 0 à 10 bars et une deuxième zone de pression comprend la zone de 0 à 16 bars.

3. Capteur de pression (1) selon au moins l'une des revendications précédentes, **caractérisé en ce qu'**une mesure de pression différentielle peut être effectuée entre deux ports de pression (4).

4. Capteur de pression (1) selon au moins une des revendications précédentes, **caractérisé en ce que** l'interface de sortie (6) est au moins une interface de IO-Link (11).

5. Capteur de pression (1) selon au moins l'une des revendications précédentes, **caractérisé en ce que** l'interface de sortie (6) est au moins une interface d'Ethernet (12).

6. Capteur de pression (1) selon au moins l'une des revendications précédentes, **caractérisé en ce que** l'interface de sortie (6) est au moins une interface de bus de terrain.

7. Capteur de pression (1) selon au moins l'une des revendications précédentes, **caractérisé en ce qu'**au moins des boutons de commande (14) sont disposés sur le boîtier (2).

8. Capteur de pression (1) selon au moins l'une des revendications précédentes, **caractérisé en ce qu'**au moins un écran d'affichage plat (15) est disposé sur le boîtier (2).

9. Capteur de pression (1) selon au moins l'une des revendications précédentes, **caractérisé en ce que** l'unité de commande et d'évaluation (3) est programmable.

10. Capteur de pression (1) selon au moins l'une des revendications précédentes, **caractérisé en ce qu'**au moins un capteur de température (16) est disposé dans le boîtier (2), le capteur de température (16) étant relié à l'unité de commande et d'évaluation (3).

11. Capteur de pression (1) selon au moins l'une des revendications précédentes, **caractérisé en ce qu'**au moins un capteur de vibrations (17) est disposé dans le boîtier (2), et le capteur de vibrations (17) étant relié à l'unité de commande et d'évaluation (3).

12. Capteur de pression (1) selon au moins l'une des revendications précédentes, **caractérisé en ce que** le port de pression (4) des cellules de mesure de la pression (5) est relié au boîtier (2) par un tube (19), et plusieurs cellules de mesure de la pression (5) étant fixées à une carte imprimée commune (18).

13. Capteur de pression (1) selon au moins l'une des revendications précédentes, **caractérisé en ce que** le port de pression (4) de la cellule de mesure de la pression (5) est directement relié au boîtier (2) et chaque cellule de mesure de la pression (5) est disposée sur une carte imprimée respectivement séparée (18).
